# EUROPEAN PATENT SPECIFICATION

(11) **EP 2 328 297 B1**
(45) Date of publication and mention of the grant of the patent: **12.09.2012**
(21) Application number: 09360051.8
(22) Date of filing: 27.11.2009
(51) Int. Cl.: H04L 1/18, H04L 12/24, H04W 36/18

(54) **Data packet transmission regime modification and notification thereof to a set of active base stations**
Datenpaketübertragungszustandsschaltung und deren Benachrichtigung an eine Gruppe von aktiven Basisstationen
Modification de régime de transmission de données en paquets et notification de celle-ci à un ensemble de stations bases actives

(43) Date of publication of application: 01.06.2011
(73) Proprietor: Alcatel Lucent, 75007 Paris (FR)
(72) Inventor: Wong, Shin Homg, Chippenham, Wiltshire SN14 0SP (GB); Baker, Matthew P.J., Canterbury, Kent CT2 9DB (GB)
(74) Representative: Sarup, David Alexander

(56) References cited:
- WO-A1-2009/131509
- US-A1- 2009 268 707

## Description

### FIELD OF THE INVENTION

The present invention relates to a method of instructing modification of a user equipment data packet transmission regime in a wireless telecommunications network, a base station, and a computer program product.

### BACKGROUND

Wireless telecommunications systems are known. In those systems, radio coverage is provided to user equipment, for example, mobile telephones, by regions of geographical area. A base station is located in each geographical area to provide the required radio coverage. User equipment in the geographical area served by a base station receives information and data from the base station and transmits data and information to the base station.

In a high speed uplink packet access (HSUPA) telecommunications network, data and information is sent between user equipment and a base station in data packets on a radio frequency carrier.

Packets of data are sent in time blocks of predetermined length. In known wireless telecommunications systems, the available time blocks in a HSUPA network have a length of 10 milliseconds or 2 milliseconds. Those time blocks are known as data block transmit time intervals (TTI).

It will be understood that successfully sending a block of data of given size in a shorter time block (TTI) enables more data to be sent over a given period. However, in order to successfully send a block of data of a given size in a shorter time block, it is necessary to ensure that the signal to noise and interference ratio (SNIR) on the radio frequency carrier being used is sufficient. In order to achieve sufficient SNIR, telecommunications equipment (i.e. a base station or an item of user equipment) will typically need to transmit the data packet on a radio carrier at a higher power for a 2ms time interval than for a 10 ms time interval.

Transmission power available to a base station or user equipment may be limited, for example, to ensure signals are sent at a power level deemed safe for operation, or because a limited amount of power is available from a power source, or due to applicable regulations.

It will therefore be understood that, in a power limited user equipment to base station data transmission scenario, transfer of transport blocks of a given size over a shorter time period (i.e. operating in a 2 ms TTI regime rather than a 10 ms TTI regime) may result in a smaller geographical area being adequately supported by radio coverage for a given base station. Thus, although a 2ms transfer time interval regime can result in a higher total data throughput, adequately supporting such a regime may require the provision of more base stations to cover a given geographical area.

When a power limit is reached, it may be possible for an interaction between user equipment and a base station to be transferred back to a longer transmit time interval regime. Transferring back to a 10 ms transmit time interval regime from a 2ms transmit time interval regime has the advantage that, for a given transport block size, a lower signal to noise and interference ratio is required. The required signal to noise and interference ratio is more likely to be achievable within the power limitation of the wireless communications system, and the interaction between the user equipment and a base station may no longer be operating at the limit of available power. Such an arrangement allows a base station to maintain a larger coverage area, but has the potential disadvantage that outside the area in which 2 ms time interval data transmission is available, a user will be forced to operate at the lower data throughput rate offered by a 10 ms time interval transmit regime.

Various modifications to data packet transmission regimes have been proposed whereby it may be possible to use a modification of the 2 ms transmit time interval regime rather than immediately returning to a 10 ms transmit time interval regime on hitting a power limit. Those methods may generically be referred to as coverage extension transmission modes (CE Modes).

It will be understood that those CE Modes are likely to be implemented at the edge of a geographical region served by a primary or "serving" base station. In such a location, user equipment attached to that primary base station is likely to also be communicating with other, non-serving, base stations. That is to say, user equipment at the edge of the geographical region served by a serving base station will have a number of other base stations in an "active set", each of those base stations having an active radio link with the user equipment. As a result, data packets sent by user equipment may be received at non-serving base stations as well as, or instead of, the serving base station. Typically a wireless telecommunications network will be operable to use those packets of data received by non-serving base stations, combining them with other received packets to supplement and aid data transfer from user equipment to the network as a whole.

To successfully decode data sent to the network form user equipment, it is necessary for a base station to be aware of the data transmission regime being used by user equipment.

WO 2009/131509 describes a cellular radio communication system in which a mobile radio terminal transmits blocks of data in transmission time intervals (TTIs). Those blocks of data are received by a serving base station and one or more non-serving base stations.

The mobile radio terminal operable to perform transmission time interval bundling, wherein each same data block is bundled into a total of N consecutive HARQ transmissions. The number of HARQ transmissions N associated with a mobile connection is provided to the one or more non-serving base stations so that each base station may take the correct number N of HARQ transmissions into account in the combination of HARQ transmissions from the mobile terminal corresponding to one HARQ process.

US 2009/0268707 describes various methods for implementing transmission time interval bundling, together with a wireless transmit/receive unit and a base station configured to process those methods.

Accordingly, it is desired to provide robust operation of the network in the event of a modification to a user equipment data packet transmission regime.

### SUMMARY

An objet of the invention provides a method of instructing modification of a user equipment data packet transmission regime in a wireless telecommunications network as claimed in claim 1.

In a wireless telecommunications network user equipment is typically operable to measure the strength of pilot signal transmitted by base stations. It will be understood that an initial change to data transmission mode is likely to be implemented at the edge of a geographical region served by a primary or "serving" base station. In such a location, user equipment attached to that primary base station is likely to also be communicating with other, non-serving, base stations. That is to say, user equipment at the edge of the geographical region served by a serving base station will have a number of other base stations in an "active set", each of those base stations having an active radio link with the user equipment. Furthermore, a change back to normal mode operation is likely to occur as user equipment moves closer towards a base station.

When in a power limited region although primarily served by a first base station, user equipment may also be measuring particularly strong pilot signals from adjacent base stations. Those base stations will be placed, on the basis of that measurement report made by user equipment, by a Radio Network Controller, in that user equipment's "active set". The active set of any given user equipment is a list of base stations which have an active radio link with the user equipment. It will be understood that transmissions made by user equipment in the power limited region may be received by any of those base stations in the active set in addition to, or instead of, the primary serving base station. A typical network may operate such that data packets received by non-serving base stations may be combined at a higher level in the network with those packets received by serving base station to complete the flow of data from user equipment. It will thus be understood that by utilising those base stations in a user equipment "active set" various modes of processing gain may be utilised, and that higher overall data throughput from user equipment may be achieved.

In the event that user equipment reaches a power limit and wishes to modify the data packet transmission regime from a "normal mode" to a CE mode, or in fact, return to normal mode from CE mode, it must inform all those base stations with which it is in communication. Failure to communicate a change may mean that a base station is unable to decode information sent in the data packets.

A radio network controller may operate to assist propagation of a request to change data packet transmission mode through the full set of base stations in a user equipment active set. In this way, not all base stations in a user equipment active set need necessarily receive a change request directly and it may be sufficient for a single base station to receive such a message and for user equipment to change operation before it has successfully received an acknowledgement of receipt of a change request directly form all base stations in its active set. That arrangement may be particularly useful in a change from Normal Mode to CE mode in which a fast transition must be achieved as user equipment approaches a power limit, or there is a risk user equipment may drop a call before the transition is made.

Several methods have been proposed whereby the coverage of an item of user equipment operating in 2ms TTI may be extended. All proposed coverage extension modes require a change in the transmission manner of user equipment when the user equipment is power limited. Changing the period of repetition and hence the number of possible retransmissions within a given time period of a data transport block has been recognised as a manner in which a data transmission regime may be advantageously forced to operate in a CE mode. Changing the number of repetitions of transmission or retransmissions of a given transport block will affect the likelihood of that transport block being successfully received by a base station and therefore being communicated with the network as a whole.

The predetermined period of retransmission may decrease. Such a decrease is likely to occur on changing from normal mode to CE mode. Decreasing the period between re-transmissions of a given data packet increases the likelihood of that data packet successfully being received by the network whilst maintaining a particular quality of service.

The predetermined period of retransmission may increase. Such an increase in the period of retransmission is likely to occur on return to normal mode from CE mode. If no longer power limited, the period between retransmissions may be longer whilst maintaining a given quality of service, since user equipment is likely to have sufficient power headroom to adequately increase Signal to Noise ration (SNIR).

In one embodiment, the unmodified period of retransmission comprises an integer multiple of the modified period of retransmission. According to such an arrangement, likely to occur when changing from normal mode, to CE mode, that arrangement may allow those base stations which have not yet received notification of a data transmission regime change to still successfully decode some data packets sent to a network by user equipment.

This aspect recognises that the operation of a base station may require a level of asymmetry to handle a request for data packet transmission regime modification. Depending on whether a move to, or from, CE mode is requested a base station may be operable to immediately operate to instruct a change by acknowledging receipt of the change request, or to await instruction from a higher layer of the wireless telecommunication network, before instructing modification of the regime. As described above, a change from normal mode to CE mode is likely to be more time-critical than a return to Normal Mode since in a change to CE mode a power limit is being approached and unless a change occurs quickly, user equipment may drop a call. In a change to CE mode it is more likely that a base station will be operable, on receipt of a change request of that nature, to be operable to directly instruct and enable such a change.

In one embodiment, the change request is received from user equipment.

Typically user equipment has full knowledge of its own transmission power headroom. It will be appreciated that changing to coverage extension mode likely to be required to occur quickly before user equipment runs out of power and drops a call. In the event that trigger criteria have been met, user equipment may be operable to transmit a request to modify its data packet transmission regime.

Furthermore, as user equipment exits a power limited region, it may no longer need to operate in accordance with a data packet transmission regime suitable for a power limited state. If no longer power limited, user equipment will be aware that it has sufficient transmission power headroom to operate in a normal mode. In such a situation, user equipment may be operable to change its transmission mode from coverage extension mode back to normal mode. Unlike the change from normal mode to coverage extension mode, the change from coverage extension mode to normal mode does not need to be executed quickly as the user equipment is no longer in danger of dropping the call since it has sufficient available power to maintain an acceptable Quality of Service.

In one embodiment, the change request is received from a base station. Accordingly, in a switch from CE mode to Normal Mode it will be understood that in an alternative embodiment, a base station may itself be operable to determine that uplink packets can be decoded sufficiently consistently to enable a switch back to normal mode, and thus request a return to normal mode itself, without a request from user equipment directly.

In one embodiment, the unmodified period of retransmission comprises an integer multiple of the modified period of retransmission.

A second objet of the invention provides a computer program product as claimed in claim 5.

A third object of the invention provides a base station operable to instruct modification of a user equipment data packet transmission regime in a wireless telecommunications network, as claimed in claim 6.

In one embodiment, the change request originates from user equipment.

In one embodiment, the change request originates from a base station.

In one embodiment, the data packet transmission regime comprises predetermined periodic retransmission of a given data packet and the modified data packet transmission regime comprises a change to the predetermined period of retransmission.

In one embodiment, the unmodified period of retransmission comprises an integer multiple of the modified period of retransmission.

It will be understood that aspects of the invention provide a method for transmitting data from a secondary station to at least one primary station, said secondary station being capable of operating in a first and a second transmission mode, wherein the second transmission mode comprises more frequent repetition of transmitted data than the first transmission mode, characterised in that the secondary station transmits an indicator to at least one primary station when the transmission mode of the secondary station changes operation from the first transmission mode to the second transmission mode, and in that the secondary station changes operation from the second transmission mode to the first transmission mode in response to an indicator transmitted by at least one primary station.

Preferred embodiments of the invention are covered by the dependent claims.

### BRIEF DESCRIPTION OF THE DRAWINGS

Embodiments of the present invention will now be described further, with reference to the drawings In which:
Figure 1 illustrates the main components of a telecommunications network according to one embodiment;
Figure 2 illustrates schematically a power limitation scenario according to one embodiment;
Figure 3 illustrates schematically an example data transmission acknowledgement protocol;
Figure 4 illustrates schematically a data transmission regime using the data transmission acknowledgement protocol of Figure 2;
Figure 5 illustrates a modification of a data transmission regime according to one example;
Figure 6 illustrates a modification of a data transmission regime according to a second example;
Figure 7a illustrates schematically a scenario according to one embodiment in which user equipment requests modification of a data packet transmission regime;
Figure 7b illustrates schematically an unmodified data packet transmission regime (normal mode) for use in the scenario of Figure 7a;
Figure 7c illustrates schematically a modified (CE mode) data packet transmission regime for use in the scenario of Figure 7a;
Figure 8 illustrates schematically a scenario according to one embodiment in which user equipment requests modification of a data packet transmission regime; and
Figure 9 illustrates schematically a return to a normal mode data packet transmission regime from a coverage extension transmission mode for use in the scenario of Figure 8.

### DESCRIPTION OF THE EMBODIMENTS

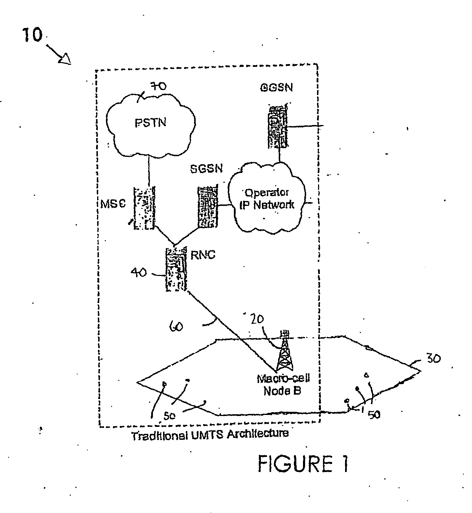

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communications system is managed by a radio network controller (RNC) 40. The radio network controller 40 controls operation of the wireless telecommunications system by communicating with a plurality of base stations over a backhaul communications link 60. The network controller also communicates with user equipment 50 via each base station and thus effectively manages a region of the entire wireless communications system.

The radio network controller 40 maintains a neighbour list which includes information about geographical relationships between sectors supported by base stations 20. In addition, the RNC maintains location information which provides information on the location of user equipment 50 within the wireless communications system 10. The RNC is operable to route traffic via circuit switched and packet switched networks. Hence a mobile switching centre is provided with which the RNC controller may communicate. The mobile switching centre can communicate with a circuit switched network such as a public switched telephone network (PSTN) 70. Similarly a network controller can communicate with servicing general packet radio service support nodes (SGSN's) and a gateway general packet radio service support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages or voice information when a user is using the equipment to make a telephone call, or to transmit other data. The base station 20, allocates resources to user equipment using parameters sent by the radio network controller 40 in a manner that aims to optimise operation of the wireless communications network 10. In a high speed up link packet access (HSUPA) telecommunications network, data and information is sent between user equipment and a base station in data packets on a radio frequency carrier. Packets of data are sent in time blocks of predetermined lengths. In known wireless telecommunications systems, the available time blocks have a length of 10ms or 2ms. Those time blocks are known as data block transmit time intervals (TTI).

It will be understood that successfully sending a block of data of a given size in a shorter time block (TTI) enables more data to be sent over a given period. However, in order to successfully send a block of data of a given size in a shorter time block, it is necessary to ensure that signal to noise and interference ratio (SNIR) on the radio frequency carrier is sufficient. In order to achieve a sufficient SNIR, telecommunications equipment (i.e. a base station or an item of user equipment) will typically need to transmit the data packet on a radio carrier at a higher power for a 2ms transmit time internal than for a 10ms transmit time interval. Transmission power available to a base station or user equipment may be limited, for example, to ensure signals are sent at power level deemed safe for operation, or because a limited amount of power is available from a power source. It will therefore be understood that, in a power limited user equipment to base station transmission scenario, transfer of transport blocks of a given size over a shorter time period (i.e. operating on the 2ms TTI regime rather than a 10ms TTI regime) may result in a smaller geographical area being adequately supported by radio coverage. Thus, although a 2ms transmit time interval regime can result in a higher total data throughput, adequately supporting such a regime may require the provision of more base stations to cover a given geographical area.

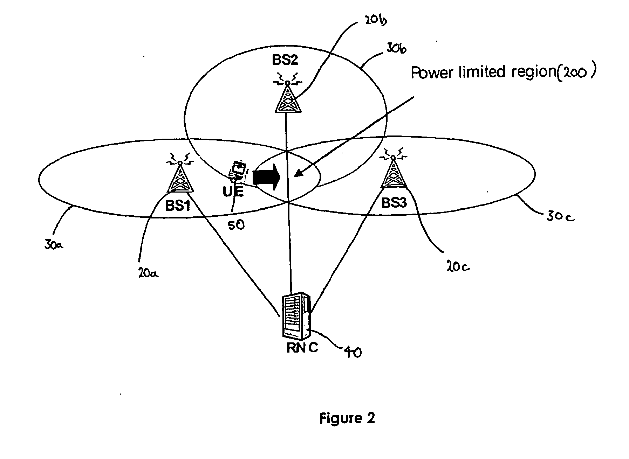

Figure 2 illustrates schematically a power limitation scenario according to one embodiment. Figure 2 illustrates three base stations 20a, 20b, 20c, each supporting a geographical area of radio coverage 30a, 30b, 30c. Each of the base stations is connected to RNC 40. User equipment 50 is served by base station one (BS1) 20a, and is in the geographical region 30a served by that base station. As user equipment 50 moves away from base station 20a, in a direction shown by the arrow in Figure 2, it is likely that it will reach the power limit of an unmodified 2ms transmit time interval data packet transmission regime. That power limitation is likely to occur when user equipment 50 is in power limited region 200 in Figure 2. It can be seen that the power limited region 200 exists on the outskirts of geographical area 30a served by base station 20a. In region 200, there is an overlap of radio coverage regions with geographical area 30b and 30c served by base stations 20b, 20c.

User equipment 50 is operable to measure the strength of pilot signals transmitted by base stations. When in power limited region 200, although primarily served by base station 20a user equipment 50 will also be measuring particularly strong pilot signals from base stations 20b, 20c. Those base stations will be placed, on the basis of that measurement report made by user equipment 50, by the RNC 40 in that user equipment's "active set". The active set of any given user equipment is a list of base stations which have an active radio link with user equipment 50. It will be understood that transmissions made by user equipment 50 in the power limited region 200 may be received by base stations 20b, 20c in addition to, or instead of the primary serving base station, 20a. Data packets received by base stations 20b, 20c may be combined at a higher level in the network 10 with those packets received by serving base station 20a to complete the flow of data from user equipment 50. It will thus be understood that by utilising those base stations in a user equipment "active set" various modes of processing gain may be utilised, and that higher overall data throughput from user equipment 50 may be achieved.

In the event that user equipment 50 reaches a power limit and wishes to modify the data packet transmission regime from a "normal mode" to a CE mode, it must inform all those base stations with which it is in communication. Failure to communicate a change may mean that a base station is unable to decode information sent in the data packets.

When moving from normal transmission mode to the modified transmission mode (i.e. when approaching a power limit) the transition to the modified data regime (CE mode) must occur rapidly or user equipment 50 may reach the power limit or drop off the network before the transition takes place. The quickest way in which user equipment can communicate with the network is at the physical layer: that is to say, direct messages between user equipment and a base station.

If user equipment 50 approaches a power limit and transmits a signal requesting a change to the modified data packet transmission regime (CE mode) that transmission including such a request may be received by only one of base stations 20a, 20b, 20c. If a base station is unaware of a transition to a modified data packet transmission regime it will assume that user equipment 50 has not changed its data packet transmission regime and therefore decoding information from user equipment 50 is no longer effective. The present invention seeks to provide a method of mitigating such a situation.

By way of explanation and background, the following paragraphs describe an example of a modified data packet transmission regime suitable for use in the telecommunications network shown in Figures 1 and 2. It will be appreciated that other data packet transmission modifications may be possible to achieve coverage extension.

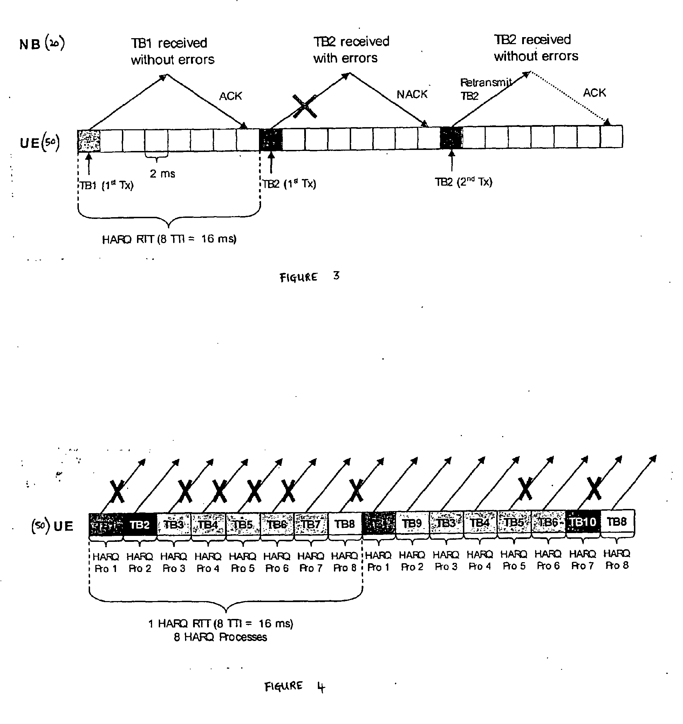

Figure 3 illustrates schematically a data transmission acknowledgement protocol used in a data transmission regime of a telecommunications network 10. In particular, Figure 3 illustrates schematically transmission of a transport block in a data packet from user equipment 50 to a base station 20 in a HSUPA network operating in a 2ms TTI regime and the operation of an acknowledgement protocol known as a Hybrid Automatic Repeat Request (HARQ). HARQ enables fast acknowledgement and consequently fast retransmission of a data packet if required. In Figure 3, a first data packet TB1 is transmitted from user equipment and successfully received by base station 20. The base station, in accordance with the HARQ process, sends an acknowledgement of safe receipt (ACK) of TB1 back to user equipment 50. Figure 3 illustrates a "stop and wait" HARQ protocol in which user equipment waits for acknowledgement of safe receipt of a data packet before sending the next. Since a successful receipt is received in respect of TB1, within a pre-programmed monitoring period, user equipment can transmit a second data packet, TB2. The monitoring period in the case shown in Figure 3 is 8 transmit time intervals, i.e. 16ms.

TB2 is not successfully received at base station 20 and thus the base station generates and sends a negative acknowledgement (NACK). After waiting the pre-programmed monitoring period and having received a NACK, user equipment retransmits TB2, which is then received successfully by the base station.

Figure 4 illustrates schematically a data transmission regime using the data transmission acknowledgement protocol of Figure 3. In a HSUPA telecommunications network a synchronous HARQ protocol is used. In such a case, retransmission of a given data packet is expected after a pre-programmed monitoring period. That pre-programmed monitoring period is the time between commencement of two transmissions of the same packet of data and has been set in accordance with a reasonable estimate of operative HARQ round trip time. The estimate of HARQ round trip time for 2ms TTI and predetermined monitoring period for the 2ms TTI regime has been set at 8TTI (16ms).

Whilst waiting for an ACK or NACK from a base station in respect of a given data packet, user equipment can transmit further data packets. The base station can also monitor for successful receipt or otherwise of those data packets and it will thus be understood that there are, at most, 8 simultaneous HARQ processes occurring at any given time.

A data transmission regime using a monitoring period of 16ms is shown. In the case illustrated, eight data packets, labelled as TB 1 to TB8 are consecutively transmitted by user equipment, one in each 2ms TTI. Each data packet is subject to a HARQ process, labelled as "HARQ Pro 1 " to "HARQ Pro8". As shown, TB1, TB3, TB4, TB5, TB6 and TB8 are not successfully received by the base station 20 and they are retransmitted in the next sequence of 8 transmitted data packets in the TTI's shown. Since TB2 and TB7, transmitted in HARQ Pro2 and HARQ Pro7 respectively, are successfully received and acknowledged by base station 20, in the next sequence of 8 transmitted data packets two new data packets TB9 and TB10 respectively, can be transmitted on HARQ Pro 2 and HARQ Pro7.

For a given application (for example, voice data, video data or an FTP process) user equipment 50 and base station 20 are aware, via a look up table, that successful reception of a transmitted data packet of a particular size within a target elapsed time period after first transmission will result in a good service experience by a user. That target elapsed time period will depend upon the application being offered. The target elapsed time period for video or voice, for example, will typically be significantly shorter than the target elapsed time for a data packet relating to a SMS message. The target elapsed time period for a data packet of a given size for a given size of data packet is referred to as "Quality of Service".

User equipment 50 and base station 20 may each have a look up table, giving an initial starting set of parameters within which user equipment 50 can operate for transmission of a data packet, or transport block, of given size for a given application. That look up table is known as a HARQ profile. The HARQ profile specifies a power offset and a number of maximum transmissions (including a first transmission) for a data packet of given size, for a particular application, requiring a particular Quality of Service.

Use of the HARQ protocol in combination with a Quality of Service target allows calculation of some indication of whether user equipment and base station are operating to offer an acceptable level of service to an end user.

It will be understood that to meet a Quality of Service target, each data packet has a target number of retransmissions. The maximum number of transmissions includes the first transmission and all subsequent retransmissions of the same data packet. If a data packet transmitted by user equipment is not successfully received by a base station after the maximum number of transmissions has been made, it is deemed to have failed and a higher level retransmission at the Radio Link Control level is performed. RLC retransmission is slow and thus undesirable. In practical terms, if a data transmission between user equipment and a base station is not meeting a required quality of service, the base station indicates to user equipment that it needs to increase the power at which it is transmitting those data packets. It will be understood that increasing the power of transmission of a data packet increases the SNIR and thus increases the chances that data packet will be successfully received by a base station within the Quality of Service target time.

For a data packet of a particular size, the larger the number of transmissions allowed by the HARQ Profile, the lower the transmit power required from user equipment when transmitting that data packet. It will be understood that, as a result of the HARQ protocol employed, a base station will be able to terminate retransmission of a data packet if the data packet is successfully received by the base station before the maximum number of transmissions set in the HARQ profile is reached. Early termination of that process results in user equipment achieving a higher total data throughput.

A Retransmission Sequence Number (RSN) is used to monitor how often a given data packet is transmitted. As described above, a radio carrier comprises a plurality of channels. A channel upon which data packets are sent from user equipment to a base station relating to user equipment applications (for example, voice, video, SMS) are sent is known as an E-DCH Dedicated Physical Data Channel (E-DPDCH). A channel upon which control information relating to the user equipment is sent is known as an E-DCH Dedicated Physical Control Channel (E-DPCCH). The RSN is sent on the E-DPCCH channel together with the data packet sent on the data channel. A known specification for HSUPA networks allows 2 bits for the RSN. However, the maximum number of transmissions is not limited to 4. Nonetheless, this is not a hindrance, since the RSN does not need to increase for transmissions beyond 4. Furthermore, the existing HARQ profile table allows up to 16 transmissions to meet a particular Quality of Service.

It has been recognised that in a power limited scenario, user equipment and base stations may be unable to meet a given Quality of Service target time by simply increasing power of transmission as described above. If a Quality of Service target is not being met, a message may be sent to up the power of transmission, and if a power threshold has been met, there may be no further power available.

It has been recognised that it is possible to employ the HARQ protocol in a modified data transmission regime in such a power limited situation, such that the number of redundant data packets transmitted is minimised and such that the target time required to achieve a given Quality of Service may still be met.

In known systems utilising the HARQ protocol, as described above, retransmission of a given data packet is expected after a pre-programmed monitoring period. That pre-programmed monitoring period is the time between commencement of two transmissions of the same packet of data and has been fixed in accordance with a reasonable estimate of operative HARQ round trip time. The estimate of HARQ round trip time for 2ms TTI and predetermined monitoring period for the 2ms TTI regime has been set at a fixed 8TTI (16ms).

It has been recognised that if the pre-programmed monitoring period is reduced, it is possible to fit more transmission of a given data packet into a Quality of Service target time. This may result in a data packet being successfully received within the Quality of Service target time and thus the Quality of Service being met. Furthermore, repetition of a data packet, as allowed by a greater number of retransmissions, increases the processing gain of a data packet (for example, by chase combining or by incremental redundancy) and thus increases coverage of a base station-user equipment interaction.

It will be understood that it is possible for user equipment or a base station to conduct more transmissions of a data packet under this modified transmission regime at full, or close to full, power. That may, however, cause interference to other users. It has been recognised that decreasing the monitoring period and thus allowing for a greater number of transmissions also allows the transmit power required to send a given data packet to be lowered, thereby further increasing the coverage offered by a base station-user equipment interaction.

In one embodiment, user equipment 20 is transmitting packets of data to a base station 20 in a 2ms TTI data transmission regime. User equipment operates as described in relation to Figures 3 and 4, aiming to meet a known Quality of Service. If user equipment 50 indicates to a base station that it has reached a predetermined power threshold, base station 20 is operable to send a signal (for example via HS-SCCH) to user equipment 50, instructing that user equipment to reduce the number of simultaneous ongoing HARQ processes from the standard 8 in the 2ms TTI regime to a lower number, for example, 6, 5, 4 or 3. As a result, the user equipment can calculate that the monitoring period for acknowledgement of successful receipt of said data packet, and the retransmission wait for a data packet is reduced.

Since the user equipment was operating to a known Quality of Service target successful transmission time before it reached a power limit trigger event, the user equipment can calculate how many transmissions it is allowed under the new regime whilst still aiming to meet the same Quality of Service target successful transmission time.

In this embodiment, the base station 20 is also operable to send a power offset to user equipment 50. User equipment 50 applies that power offset in addition to the power offset specified by the HARQ profile look up table, when transmitting data packets of an uplink data channel.

In one embodiment, the base station will be operable to complete a HARQ protocol for a data packet and return an ACK or a NACK before the time slot allocated by user equipment 20 for retransmission of that data packet. It may, however, be possible that an older base station will not capable of processing the HARQ request quickly enough to meet that target. In that instance, the base station may only reduce the number of simultaneous HARQ processes (and thus ACK/NACK receipt monitoring period) to a time period which the base station can handle. Alternatively, a base station can choose not to acknowledge specific data packet transmissions, for example alternate data packet transmissions in a sequence. In this case, a base station can make particular use of a store and process capability. Data packets received, even unsuccessfully can be combined (by chase combining or incremental redundancy). At the user equipment, an unacknowledged data packet will be assumed to have failed to be successfully received when the reduced monitoring period expires. As a result, the user equipment retransmits that data packet in the next HARQ process assigned to that data packet.

Use of a modified data transmission scheme as described above allows use of incremental redundancy which offers higher gain than simple pure repetition of transmission of a data packet. Furthermore, use of the HARQ process minimises transmission of unnecessary data packets. Since the HARQ process demands retransmission of a data packet in a spaced TTI, use of the HARQ protocol allows time diversity to be leveraged, which is particularly useful in a high Doppler environment. As a result of these factors, a data packet of a predetermined size can have a larger overall throughput, due to early termination enabled by the HARQ protocol and/or processing gain if, for example, it is transmitted via 5 HARQ transmissions in a 2ms TTI regime compared to transmission of that same data packet in one transmission in a 10ms TTI regime, even though both have the same overall transmission time.

It will therefore be understood that implementation of a modified data transmission 2ms TTI regime as described herein can allow for: an increase in geographical coverage, a maintenance of Quality of Service and an increase of data throughput compared to simply transferring to a 10ms TTI regime.

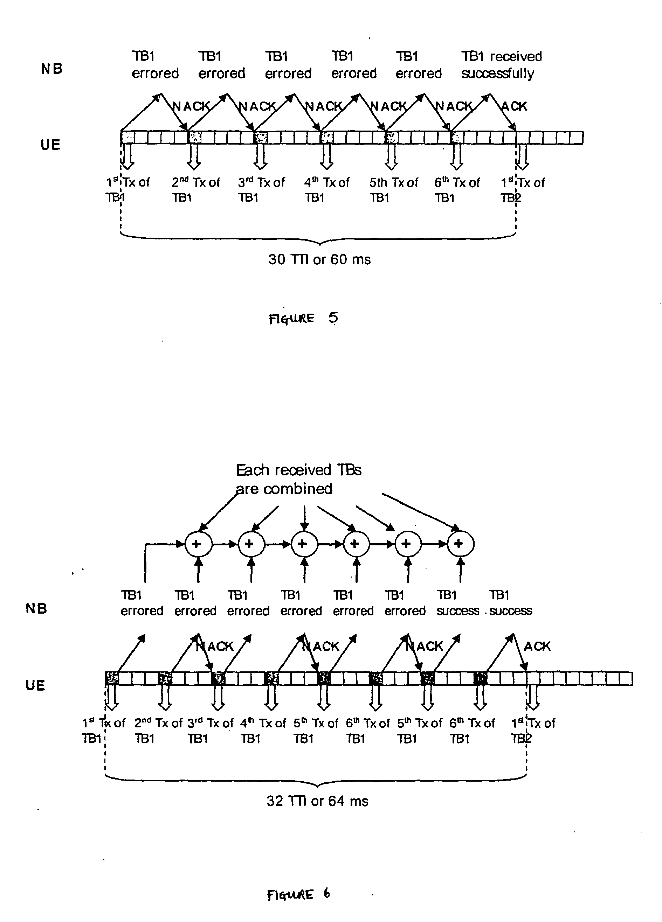

Figure 5 illustrates schematically a modification of a data transmission regime according to one embodiment. User equipment is operating in a standard 2ms TTI data transmission regime, and thus has a predetermined monitoring period set at the standard 16ms referred to above. Retransmission of any given data packet is scheduled to occur every 8 transmissions as necessary. In this standard scheme, a data packet of a predetermined size is tied to a particular Quality of Service having the following HARQ profile: maximum number of transmissions = 4, power offset 2dB. It can be calculated that the Quality of Service target time for successful transmission is 64ms (16msx4).

If user equipment fails to meet the Quality of Service target time for successful transmission, and the user equipment indicates to the base station that it is not able to transmit the data packets at a higher power due to power limitations, the base station sends a message to the user equipment modifying the data transmission regime.

In the embodiment shown, the base station indicates to the user equipment that it can reduce the simultaneous HARQ processes to 5. The base station also indicates to the user equipment that the power offset is now -1.5dB.

On receipt of this information from the base station, user equipment can then calculate the extended number of HARQ transmissions it can now make under the new data transmission regime.

In particular, the user equipment calculates the original Quality of Service target time for successful transmission. In this case, as described above, that time is 64ms (16ms x 4), or 32 TTI.

Since the number of simultaneous HARQ processes has been reduced by the base station to 5, the user equipment can also calculate that the monitoring period for receiving an ACK or NACK has been reduced to 5 x TTI, which in this case is 10ms.

The user equipment can then also calculate that under the new data transmission regime it is possible to fit in 6.4 transmissions to try to meet the same Quality of Service time for successful receipt. The number of allowed transmissions is reduced to the nearest whole number. In this example, the number of allowed transmissions is therefore 6.

The user equipment also acts to calculate a new overall power offset applicable to transmission on the dedicated data channel (E-DPDCH) carrying those data packets.

The modified power offset allows the overall power offset to be calculated for the modified data transmission regime as follows:

| | |
|---|---|
| Overall power offset | = original power offset + power offset in modified regime |
| 0.5dB | = 2dB - 1.5dB |

The modified data transmission regime is shown schematically in Figure 5 as follows, by considering the transmission of a data packet TB1. TB1 is scheduled for transmission every 5 TTI. In the example illustrated, the user equipment received a NACK back from a base station in respect of the first 5 transmissions. The sixth transmission of TB1 is, however, successful and user equipment can then place a new data packet in the schedule in place of TB1. The total time taken to successfully transmit TB1 is, in this case, 30TTI (60ms) and is still within the target successful transmission time period required to maintain Quality of Service required prior to data transmission regime modification.

Figure 6 illustrates schematically a modification of a data transmission regime according to a second embodiment.

In this embodiment the base station processing is not sufficient to match a reduced number of simultaneous HARQ processes, i.e. the base station is unable to ACK or NACK receipt of a data packet before scheduled retransmission of that data packet by user equipment.

For simplicity, the user operates in standard 2ms TTI identically to the embodiment described in Figure 5. That is to say the HARQ profile of standard operation is: maximum number of transmissions = 4, power offset = 2dB. As calculated previously, the Quality of Service target time for successful transmission is 32TTI (64ms).

If user equipment fails to meet the Quality of Service target time for successful transmission, and the user equipment indicates to the base station that it is not able to transmit the data packets at a higher power due to power limitations, the base station sends a message to the user equipment modifying the data transmission regime.

In the embodiment shown, the base station indicates to the user equipment that it can reduce the simultaneous HARQ processes to 4. The base station also indicates to the user equipment that the power offset is now -3.0dB.

On receipt of this information from the base station, user equipment can then calculate the extended number of HARQ transmissions it can now make under the new data transmission regime.

In particular, the user equipment calculates the original Quality of Service target time for successful transmission. In this case, as described above, that time is 64ms (16ms x 4), or 32 TTI.

Since the number of simultaneous HARQ processes has been reduced by the base station to 4, the user equipment can also calculate that the monitoring period for receiving an ACK or NACK has been reduced to 4 x TTI, which in this case is 8ms.

The user equipment can then also calculate that under the new data transmission regime it is possible to fit in 8 transmissions to try to meet the same Quality of Service target time for successful receipt.

The user equipment also acts to calculate a new overall power offset applicable to transmission on the dedicated data channel (E-DPDCH) carrying those data packets.

The modified power offset allows the overall power offset to be calculated for the modified data transmission regime as follows:

| | |
|---|---|
| Overall power offset | = original power offset + power offset in modified regime |
| -1.0dB | = 2dB - 3.0dB |

In this embodiment, the base station is unable to complete a HARQ process for a data packet before that data packet is scheduled for retransmission by the user equipment. The base station is, however, capable of acknowledging alternate data packet transmissions.

The modified data transmission regime is shown schematically in Figure 6 in relation to transmission of a data packet TB1. User equipment transmits data packet TB1 and waits for 3TTI's before scheduled retransmission of TB1. In the absence of any acknowledgement from the base station before scheduled retransmission, the user equipment assumes that TB 1 was not received by the base station and retransmits TB 1 as shown.

As shown in Figure 6, TB1 is retransmitted 7 times after first transmission. The data packet TB 1 is successfully received by the base station on the 7th transmission (6th retransmission). Since the base station was unable to acknowledge safe receipt before the 8th transmission, user equipment transmits TB1 8 times. In this example, since the base station is operable to effectively acknowledge alternate data packet transmissions, at most only one additional unnecessary transmission occurs.

The total time taken to successfully transmit TB1 is, in this case, 32TTI (64ms) and still meets the target successful transmission time period required to maintain Quality of Service required prior to data transmission regime modification.

Several methods have been proposed whereby the coverage of an item of user equipment operating in 2ms TTI may be extended. All proposed coverage extension modes require a change in the transmission manner of user equipment 50 when the user equipment is power limited. The modified transmission manner from normal transmission for coverage extension shall be referred to throughout this document as coverage extension mode (CE mode). When user equipment 50 is not in coverage extension mode, its transmission manner shall be referred to as normal mode. The change to CE mode is typically initiated by a mode change trigger after an evaluation that user equipment 50 operating in 2ms transport time interval data packet transmission regime requires coverage extension for example due to a high received block error rate or a lack of further available transmit power. When user equipment 50 does not require coverage extension, a suitable trigger initiates a mode change back from CE mode to normal mode.

As described in relation to Figure 2, user equipment 50 and base stations connected to user equipment 50 advantageously need to know of any transmission mode change (whether it is from normal mode to coverage extension mode or a return from coverage extension mode to normal mode) to benefit from having more than one active radio link.

User equipment 50 has an active set which, in the arrangement shown in Figure 2 comprises base stations 20a, 20b, 20c that each have a radio link connection with user equipment 50. Each of those base stations in user equipment's 50 active set requires to know when the transmission mode has been changed or modified.

In HSUPA data to be sent from user equipment to the network as a whole is packaged. The user equipment 50 communicates with a base station using an uplink enhanced dedicated channel (E-DCH). That transport channel is made up of two further channels namely: one E-DCH dedicated physical control channel (called the E-DPCCH) and one or more E-DCH dedicated physical data channels (E-DPDCH). The data channel (E-DPDCH) contains the data that is to be sent to the network as a whole and the control channel (the E-DPCCH) contains control information which includes information indicating how the packaged data must be decoded. The control information on the E-DPCCH typically includes a transport format combination indicator (E-TFCI). That indicator indicates the format used on the data channel so that a receiving base station can decode the data that user equipment is sending. The E-TFCI comprises seven bits and some of those are reserved.

When user equipment wishes to change data packet transmission mode, indicators are transmitted on the E-DPCCH for example using the E-TFCI. However, it may be that user equipment is programmed to await acknowledgment from each and all of the base stations in its active set. Such solutions are considered potentially unreliable, due to the power level at which the E-DPCCH is usually transmitted (the E-DPCCH control channel is usually transmitted at a lower power than the data channel).

It may be possible in some embodiments, to temporarily use that power usually used to send the data itself to send the E-DPCCH data. Such an arrangement recognises that successfully sending a modification request may allow user equipment to continue sending data, so temporarily suspending data transmission in order to ensure such a modification request reaches base stations could have a greater overall benefit.

In any case, the modification request sent from user equipment 50 to base stations 20 is known as an E-DPCCH order.

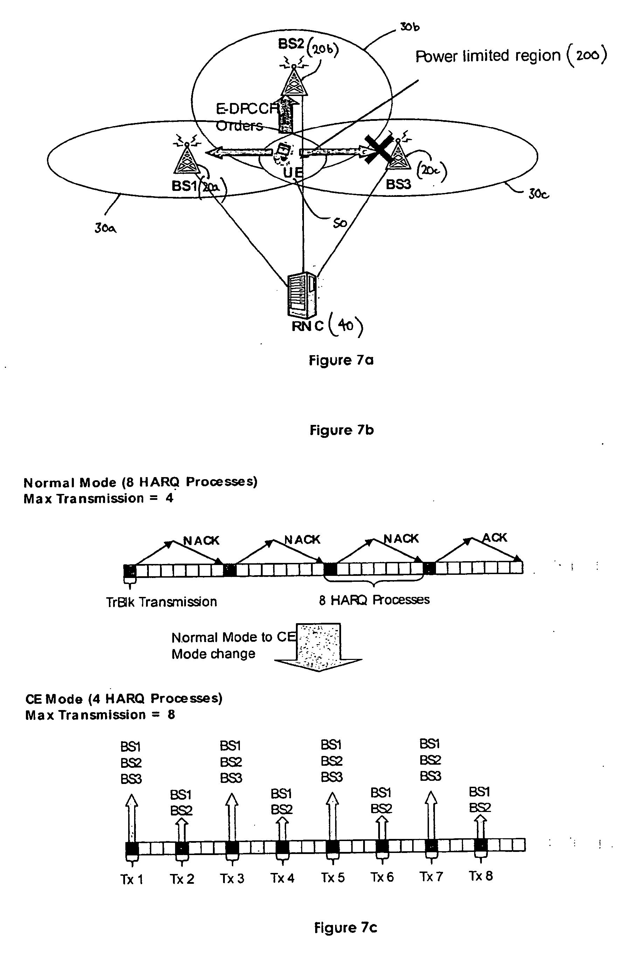

Figure 7a is a schematic representation of a scenario according to one embodiment in which user equipment may act to modify a data packet trade transmission regime. When user equipment 50 is operating in a 2ms transmit time interval data packet transmission regime and is running out of transmission power for example, because it is moving away from base station 20a, it acts to trigger a transmission mode change from normal mode to a coverage extension mode thereby extending the coverage area within which it may achieve a higher data throughput.

As is described above in relation to a particular data packet transmission modification, the trigger event may be determined by user equipment 50. User equipment has full knowledge of its own transmission power headroom. It will be appreciated that changing to coverage extension mode is likely to be required to occur quickly before user equipment 50 runs out of power and drops a call. In the event that trigger criteria have been met, user equipment 50 transmits a request to modify its data packet transmission regime on an E-DPCCH as described above. That request to change transmission regime is transmitted and may be received by one or more of the base stations in the user equipment active set. In the case illustrated in Figure 7a any one of base stations 1 to 3 (20a, 20b, 20c) may receive the request for coverage extension mode change made by user equipment 50.

In accordance with one particular embodiment, the following steps are performed:
i) user equipment 50 transmits a request to change from normal mode to coverage extension mode to base stations in its active set.
ii) User equipment 50 awaits an acknowledgement from any one of base stations 20a, 20b, 20c. As soon as one acknowledgement is received from a base station in the active set, user equipment 50 operates to change to coverage extension mode.

It will be appreciated, at this stage, that not all base stations may know of the change from normal mode to coverage extension mode.

For those base stations in the active set which fail to directly receive the request to change to coverage extension mode, it may be possible that they can continue to decode data received from user equipment, but the efficiency and effectiveness of their decoding will depend upon the coverage extension mode selected by user equipment and the original transmission regime used by user equipment 50. It can be seen, for example, that if a HARQ scheme is used such as the squeezed extended HARQ scheme described above in relation to Figures 3 to 6, reduction of the number of HARQ processes to a factor of one of the normal number of HARQ processes allows those base stations which are not aware of a coverage extension mode data packet transmission regime change to still continue decoding some of the packets received from user equipment 50.

Figure 7b illustrates the schematic representation of an unmodified data packet transmission regime according to the normal mode. In the normal mode, the maximum number of transmission is 4 and the number of HARQ processes is 8. After the change to coverage extension mode, which is illustrated in Figure 7c, the number of HARQ processes is reduced to 4 giving a maximum number of transmissions of 8.

In the situation illustrated in Figure 7a, base station 20a and 20b successfully receive the request from user equipment 50 to modify data transmission regime as indicated by arrows. Base station 20c does not directly receive that request to change and therefore is unaware (at least initially) of the change data transmission regime. As soon as an acknowledgement of the modification request is received form base station 20a or 20b, user equipment 50 commences transmission of data under the new regime as illustrated in Figure 7c. Those base stations that directly received the CE mode change notification namely base station 1 and base station 2 are immediately able to combine transmissions that coincide with the expected positions of the transmissions in coverage extension mode. Such an arrangement allows those base stations to benefit from process and gain. That is to say, base stations 20a, 20b are operable to combine data or partial data received in those particular time slots.

The base station 20c that failed to receive the coverage extension mode change notification directly attempts to decode transmissions that do not coincide with those in normal mode transmission independently. If successful, those packets will end up in duplicates which can be removed by detection of a repeated sequence higher in the protocol stack of the network as a whole. In this case base station 20c, loses some of the benefit of coverage extension mode but, because of the particular coverage extension mode chosen in this case, does not suffer a catastrophic loss of data due to attempting to combine retransmissions which originated from different packets. It will therefore be understood that some of the transmissions from user equipment 50 can still be potentially decoded by all base stations irrespective of the change to coverage extension mode.

The final step in accordance with this embodiment to avoid the situation described in relation to base station 20c and benefit from full processing gain, is to ensure base stations 20a, 20b in the active set which directly receive the request from user equipment 50 act to report receipt of that request to RNC 40.

RNC 40 is then operable to inform all base stations in the active set of the transmission mode to change to CE mode by user equipment 50. Such notification enables the base stations which initially failed to receive the mode change notification directly, in this case 20c, to be notified and to adapt their reception pattern to fit the coverage extension mode transmissions being made by user equipment 50.

Returning now to Figure 7c, in which the number of HARQ processes has changed from 8 to 4: assuming a transport block (shaded in Figure 7c) requires 8 transmissions to get through, user equipment transmission 1, 3, 5 and 7 of that transport block can be received by all base stations (20a, 20b, 20c), in the user equipment active set, irrespective of whether the change to CE mode is known by all base stations. However, transmissions 2, 4, 6 and 8 can only be correctly decoded and combined by base stations 20a and 20b who are aware that the user equipment is in coverage extension mode. In this instance until base station 3 (20c) has been informed by the RNC that user equipment is operating in coverage extension mode, only base station 1 and base station 2 can benefit from processing gain using coverage extension mode.

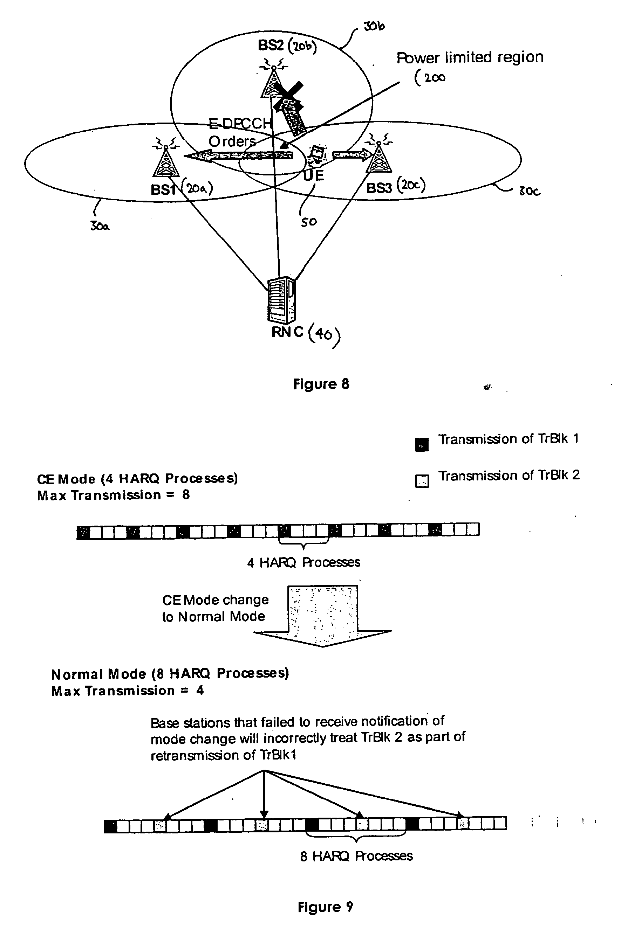

Figure 8 illustrates a schematic representation of a scenario according to one embodiment in which user equipment modifies a data packet transmission regime. If user equipment 50 continues to move towards base station 20c it exits the power limited region 200 within which coverage extension mode is likely to be required.

User equipment 50 may be operating in coverage extension mode whilst in the power limited region and as it approaches base station 20c it may no longer need to operate in accordance with a data packet transmission regime suitable for a power limited state. If no longer power limited, user equipment 50 has sufficient transmission power headroom to operate in a normal mode. In such a situation, user equipment 50 is operable to change its transmission mode from coverage extension mode back to normal mode. Unlike the change from normal mode to coverage extension mode, the change from coverage extension mode to normal mode does not need to be executed quickly since the user equipment 50 is no longer in danger of dropping the call since it has suffiecient available power to maintain an acceptable Quality of Service. As a result, the mode change from CE mode to Normal Mode can be instructed or signalled by the RNC 40 in response to an indication sent by either user equipment 50 or a base station 20, rather than happening as soon as one base station acknowledges a request for a mode change is made.

In one embodiment, user equipment 50 sends a request to change from coverage extension mode to normal mode on an E-DPCCH channel. The mode change in this described embodiment is requested by the user equipment since the user equipment may be in the best position to evaluate its own transmission power head room. It will be understood that in an alternative embodiment a base station may realise that the uplink packets can be decoded sufficiently consistently to enable a switch back to normal mode, and thus request a return to normal mode itself, without a request from user equipment directly.

One or more base stations 20a, 20b, 20c receive the request for a return to Normal Mode operation sent by user equipment 50. On receipt of that request, the base stations act to relay that request to the RNC 40. Once the RNC has received that request to return to normal mode it acts to inform all of the base stations in the active set of user equipment 50 that a request to return to normal mode has been made. Once acknowledgements have been received from all base stations in the active set, the RNC informs the user equipment to change its mode to a normal mode and to stop transmitting in coverage extension mode.

In this way, user equipment 50 is only instructed to change to normal mode when all base stations in the active set are ready to receive a normal mode. Unlike a mode change from normal mode to coverage extension mode, a return to normal mode requires that all base stations know that the user equipment is in normal mode in order to be able to decode the packets of data sent by user equipment correctly. Any base station which fails to get the mode change notification will incorrectly treat some transport blocks as part of a retransmission of another transport block.

Figure 9 illustrates an example of a return to a normal mode data packet transmission regime from a coverage extension transmission mode. In the particular coverage extension mode of this example, the maximum number of transmissions is 8, subject to 4 HARQ processes. It can be seen that in such a CE mode, a base station operating under coverage extension mode would be expecting re-transmission of transport block 1 every 4 transmit time intervals. On return to normal mode in this example, the maximum number of transmissions is 4 subject to 8 HARQ processes. If a base station has not been informed of the return to normal mode, that base station would incorrectly expect re-transmission of transport block 1 after 4 transmit time intervals. It will be understood that, in reality, a different transport block will be transmitted by user equipment 50 in those slots. Consequently, any base station which is unaware of the return to normal mode may attempt to combine two completely different packets, resulting in total data loss. Furthermore, those base stations unaware of the return to normal mode may incorrectly believe that the transport block for which it was expecting a re-transmission in that slot has been successfully received and that the new transport block transmitted in that slot is a new packet occupying the same HARQ process.

A method according to one embodiment ensures, via routing the change request fully through the RNC to all base stations in an active set, that the switch to normal mode from coverage extension mode only occurs once all base stations in the active set of user equipment 50 have acknowledged such a change.

It will thus be understood that according to the invention, downlink signalling is used only to trigger a change from coverage extension mode to normal mode, while uplinks signalling is used to trigger a change from normal mode to CE mode.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the invention. It will thus be appreciated that those skilled in the art will be able to devise various arrangements that, although not explicitly described or shown herein, embody the invention and are included within its scope. Furthermore, all examples recited herein are principally intended expressly to be only for pedagogical purposes to aid the reader in understanding the invention and the concepts contributed by the inventor(s) to furthering the art, and are to be construed as being without limitation to such specifically recited examples and conditions.

The scope of the invention is defined by the appended claims.

## Claims

1. A method of instructing modification of a user equipment data packet transmission regime in a wireless telecommunications network (10), said data packet transmission regime comprising predetermined periodic retransmission of a given data packet and said modified data packet transmission regime comprising a change to the predetermined period of retransmission, said method comprising the steps of:
receiving at a base station (20) a change request requesting modification of a data packet transmission regime between user equipment (50) and said base station (20); the method being **characterized in that** it further comprises the steps of :
identifying whether said change request comprises a request to increase or decrease said period between retransmissions;
transmitting from said base station (20) an indication of receipt of said change request to a radio network controller (40); and, if said change request is a request to decrease said period between retransmissions,
instructing modification of said data packet transmission regime by instructing said user equipment (50) to commence transmission according to said modified data packet transmission regime,
or, if said change request is a request to increase said period between retransmissions,
awaiting receipt of an instruction at said base station from said radio network controller (40) to commence said modification in data packet transmission regime, before
instructing modification of said data packet transmission regime by instructing said user equipment (50) to commence transmission according to said modified data packet transmission regime.

2. A method according to claim 1, wherein said change request originates from said user equipment (50).

3. A method according to claim 1, wherein said change request is received from said base station (20).

4. A method according to any one of claims I to 3, wherein the unmodified period of retransmission comprises an integer multiple of the modified period of retransmission.

5. A computer program product comprising computer program code means adopted to perform the method steps of any one of claims 1 to 4 when said code means is executed on a computer.

6. A base station (20) operable to instruct modification of a user equipment data packet transmission regime in a wireless telecommunications network, said data packet transmission regime comprising predetermined periodic retransmission of a given data packet and said modified data packet transmission regime comprising a change to the predetermined period of re-transmission, said base station comprising:
change request reception logic operable to receive a change request requesting modification of a data packet transmission regime between user equipment (50) and said base station (20), said base station being **characterized in that** said change request reception logic is further operable to identify whether said change request comprises a request to increase or decrease said period between retransmissions; said base station further comprising :
transmission logic operable to transmit an indication of receipt of said change request to a radio network controller (40); and,
implementation logic operable, if said change request is a request to increase said period between retransmissions,
to await receipt of an instruction from said radio network controller (40) to commence said modification in data packet transmission regime, before
instructing modification of said data packet transmission regime by instructing said user equipment (50) to commence transmission according to said modified data packet transmission regime; said implentation logic being operable,
if said change request is a request to decrease said period between retransmissions,
to instruct modification of said data packet transmission regime by instructing said user equipment (50) to commence transmission according to said modified data packet transmission regime.

7. A base station according to claim 6, wherein the unmodified period of retransmission comprises an integer multiple of the modified period of retransmission.

## Patentansprüche

1. Verfahren zum Anordnen der Änderung eines Datenpaketübertragungsregimes eines Benutzerendgeräts in einem drahtlosen Telekommunikationsnetzwerk (10), wobei das besagte Datenpaketübertragungsregime eine vorbestimmte periodische erneute Übertragung eines gegebenen Datenpakets umfasst und das besagte geänderte Datenpaketübertragungsregime eine Änderung des vorbestimmten Zeitraums der erneuten Übertragung umfasst, wobei das besagte Verfahren die folgenden Schritt umfasst:
Empfangen, an einer Basisstation (20), einer Änderungsanforderung, welche die Änderung eines Datenpaketübertragungsregimes zwischen dem Benutzerendgerät (50) und der besagten Basisstation (20) anfordert,
wobei das Verfahren weiterhin **dadurch gekennzeichnet ist, dass** es weiterhin die folgenden Schritte umfasst:
Identifizieren, ob die Änderungsanforderung eine Anforderung für eine Erhöhung oder Verringerung des besagten Zeitraums zwischen erneuten Übertragungen enthält;
Übertragen, von der besagten Basisstation (20), einer Angabe über den Empfang der besagten Änderungsanforderung an einen Funknetzwerk-Controller (40); und, wenn die besagte Änderungsanforderung eine Anforderung für die Verringerung des besagten Zeitraums zwischen erneuten Übertragungen ist,
Anordnen der Änderung des besagten Datenpaketübertragungsregimes durch Anweisen des besagten Benutzerendgeräts (50), dass es mit der Übertragung gemäß dem besagten geänderten Datenpaketübertragungsregime beginnen soll,
oder, wenn die besagte Änderungsanforderung eine Anforderung für die Erhöhung des besagten Zeitraums zwischen erneuten Übertragungen ist,
Warten auf den Empfang, an der besagten Basisstation, einer Anweisung von dem besagten Funknetzwerk-Controller (40), dass mit der besagten Änderung des Datenpaketübertragungsregimes begonnen werden soll, bevor
die Änderung des besagten Datenpaketübertragungsregimes durch Anweisen des besagten Benutzerendgeräts (50), dass es mit der Übertragung gemäß dem besagten geänderten Datenpaketübertragungsregime beginnen soll, angeordnet wird.

2. Verfahren nach Anspruch 1, wobei die besagte Änderungsanforderung von dem besagten Benutzerendgerät (50) erzeugt wird.

3. Verfahren nach Anspruch 1, wobei die besagte Änderungsanforderung von der besagten Basisstation (20) empfangen wird.

4. Verfahren nach einem beliebigen der Ansprüche 1 bis 3, wobei der unveränderte Zeitraum für die erneute Übertragung ein ganzzahliges Vielfaches des geänderten Zeitraums für die erneute Übertragung umfasst.

5. Computerprogramm-Produkt mit Computerprogramme-Codemitteln, die für das Durchführen der Verfahrensschritte gemäß einem beliebigen der Ansprüche 1 bis 4 ausgelegt sind, wenn die besagten Codemittel auf einem Computer ausgeführt werden.

6. Basisstation (20), betreibbar für das Anordnen der Änderung eines Benutzerendgerät-Datenpaketübertragungsregimes in einem drahtlosen Telekommunikationsnetzwerk, wobei das besagte Datenpaketübertragungsregime eine vorbestimmte periodische erneute Übertragung eines gegebenen Datenpakets umfasst und das besagte geänderte Datenpaketübertragungsregime eine Änderung des vorbestimmten Zeitraums der erneuten Übertragung umfasst, wobei die besagte Basisstation umfasst:
Eine Änderungsanforderungsempfangslogik, betreibbar für den Empfang einer Änderungsanforderung, welche die Änderung eines Datenpaketübertragungsregimes zwischen dem Benutzerendgerät (50) und der besagten Basisstation (20) anfordert, wobei die besagte Basisstation **dadurch gekennzeichnet ist, dass** die besagte Änderungsanforderungsempfangslogik weiterhin betreibbar ist, um zu identifizieren, ob die besagte Änderungsanforderung eine Anforderung für die Erhöhung oder Verringerung des besagten Zeitraums zwischen erneuten Übertragungen enthält; wobei die besagte Basisstation weiterhin umfasst:
eine Übertragungslogik, betreibbar für die Übertragung einer Angabe über den Empfang der besagten Änderungsanforderung an einen Funknetzwerk-Controller (40); und
eine Umsetzungslogik, betreibbar, wenn die besagte Änderungsanforderung eine Anforderung für die Erhöhung des besagten Zeitraums zwischen erneuten Übertragungen ist,
für das Warten auf den Empfang einer Anweisung von dem besagten Funknetzwerk-Controller (40), dass mit der besagten Änderung des Datenpaketübertragungsregimes begonnen werden soll, bevor
die Änderung des besagten Datenpaketübertragungsregimes durch Anweisen des besagten Benutzerendgeräts (50), dass es mit der Übertragung gemäß dem besagten geänderten Datenpaketübertragungsregime beginnen soll, angeordnet wird; wobei die besagte Umsetzungslogik betreibbar ist, wenn die besagte Änderungsanforderung eine Anforderung für die Verringerung des besagten Zeitraums zwischen erneuten Übertragungen ist, um
die Änderung des besagten Datenpaketübertragungsregimes durch Anweisen des besagten Benutzerendgeräts (50), dass es mit der Übertragung gemäß dem besagten geänderten Datenpaketübertragungsregime beginnen soll, anzuordnen.

7. Basisstation nach Anspruch 6, wobei der unveränderte Zeitraum für die erneute Übertragung ein ganzzahliges Vielfaches des geänderten Zeitraums für die erneute Übertragung umfasst.

## Revendications

1. Procédé pour ordonner une modification d'un régime de transmission de paquets de données d'équipement utilisateur dans un réseau de télécommunication sans fil (10), ledit régime de transmission de paquets de données comprenant une retransmission périodique prédéterminée d'un paquet de données donné et ledit régime de transmission de paquets de données modifié comprenant un changement de la période prédéterminée de retransmission, ledit procédé comprenant les étapes suivantes :
recevoir, au niveau d'une station de base (20), une requête de changement demandant la modification du régime de transmission de paquets de données entre l'équipement utilisateur (50) et ladite station de base (20) ;
le procédé étant **caractérisé en ce qu'**il comprend en outre les étapes suivantes :
identifier si ladite requête de changement comprend une requête pour augmenter ou diminuer ladite période entre des retransmissions ;
transmettre à partir de ladite station de base (20) une indication de réception de ladite requête de changement vers un contrôleur de réseau radio (40) ; et, si ladite requête de changement est une requête pour diminuer ladite période entre des retransmissions,
ordonner une modification dudit régime de transmission de paquets de données en ordonnant audit équipement utilisateur (50) de commencer une transmission conformément audit régime de transmission de paquets de données modifié,
ou, si ladite requête de changement est une requête pour augmenter ladite période entre des retransmissions,
attendre la réception d'une instruction au niveau de ladite station de base à partir dudit contrôleur de réseau radio (40) pour commencer ladite modification dans un régime de transmission de paquets de données, avant
d'ordonner une modification dudit régime de transmission de paquets de données en ordonnant audit équipement utilisateur (50) de commencer une transmission conformément audit régime de transmission de paquets de données modifié.

2. Procédé selon la revendication 1, dans lequel ladite requête de changement provient dudit équipement utilisateur (50).

3. Procédé selon la revendication 1, dans lequel ladite requête de changement est reçue depuis ladite station de base (20).

4. Procédé selon l'une quelconque des revendications 1 à 3, dans lequel la période non modifiée de retransmission comprend un multiple entier de la période de retransmission modifiée.

5. Produit de programme informatique comprenant des moyens de code de programme informatique adaptés pour exécuter les étapes de procédé selon l'une quelconque des revendications 1 à 4 lorsque lesdits moyens de code sont exécutés sur un ordinateur.

6. Station de base (20) permettant d'ordonner une modification d'un régime de transmission de paquets de données d'équipement utilisateur dans un réseau de télécommunication sans fil, ledit régime de transmission de paquets de données comprenant une retransmission périodique prédéterminée d'un paquet de données donné et ledit régime de transmission de paquets de données modifié comprenant un changement de la période prédéterminée de retransmission, ladite station de base comprenant :
une logique de réception de requête de changement permettant de recevoir une requête de changement demandant une modification d'un régime de transmission de paquets de données entre un équipement utilisateur (50) et ladite station de base (20), ladite station de base étant **caractérisée en ce que** ladite logique de réception de requête de changement permet en outre d'identifier si ladite requête de changement comprend une requête pour augmenter ou diminuer ladite période entre des retransmissions ; ladite station de base comprenant en outre :
une logique de transmission permettant de transmettre une indication de réception de ladite requête de changement à un contrôleur de réseau radio (40) ; et,
une logique de mise en oeuvre permettant, si ladite requête de changement est une requête pour augmenter ladite période entre des retransmissions,
d'attendre la réception d'une instruction à partir dudit contrôleur de réseau radio (40) pour commencer ladite modification dans un régime de transmission de paquets de données, avant
d'ordonner une modification dudit régime de transmission de paquets de données en ordonnant audit équipement utilisateur (50) de commencer une transmission conformément audit régime de transmission de paquets de données modifié ; ladite logique de mise en oeuvre permettant, si ladite requête de changement est une requête pour diminuer ladite période entre des retransmissions,
d'ordonner une modification dudit régime de transmission de paquets de données en ordonnant audit équipement utilisateur (50) de commencer une transmission conformément audit régime de transmission de paquets de données modifié.

7. Station de base selon la revendication 6, dans lequel la période non modifiée de retransmission comprend un multiple entier de la période de retransmission modifiée.
